# EUROPÄISCHE PATENTSCHRIFT

(11) **EP 3 943 273 B1**
(45) Veröffentlichungstag und Bekanntmachung des Hinweises auf die Patenterteilung: **07.08.2024**
(21) Anmeldenummer: 21182402.4
(22) Anmeldetag: 29.06.2021
(51) Int. Cl.: B29C 48/00, B29C 48/395, B29C 48/92, B29D 30/72, B60C 1/00

(54) **VERFAHREN ZUM HERSTELLEN EINES EXTRUDATS ZUR HERSTELLUNG EINES BODY-REIFENBAUTEILS, VERWENDUNG EINES AUSGEFORMTEN EXTRUDATS HERGESTELLT ODER HERSTELLBAR NACH DEM VERFAHREN UND DIE VERWENDUNG EINER VORRICHTUNG ZUR DURCHFÜHRUNG DES VERFAHRENS**
METHOD FOR PRODUCING AN EXTRUDATE FOR THE PRODUCTION OF A BODY-TYRE COMPONENT, USE OF A MOULDED EXTRUDATE WHICH IS PRODUCED OR CAN BE PRODUCED BASED ON THE METHOD AND THE USE OF A DEVICE FOR CARRYING OUT THE METHOD
PROCÉDÉ DE FABRICATION D'UN EXTRUDAT DESTINÉ À LA FABRICATION D'UN COMPOSANT DU PNEU, UTILISATION D'UN EXTRUDAT FORMÉ FABRIQUÉ OU POUVANT ÊTRE FABRIQUÉ SELON LE PROCÉDÉ ET UTILISATION D'UN DISPOSITIF POUR LA MISE EN UVRE DU PROCÉDÉ

(30) Priorität: 21.07.2020 DE 102020209087
(43) Veröffentlichungstag der Anmeldung: 26.01.2022
(73) Patentinhaber: Continental Reifen Deutschland GmbH, 30175 Hannover (DE)
(72) Erfinder: Sharifi, Monir, 30419 Hannover (DE); Wagner, Andre, 30419 Hannover (DE)
(74) Vertreter: Continental Corporation

(56) Entgegenhaltungen:
- EP-A1- 3 431 251
- DE-A1- 102005 044 998
- DE-A1- 102014 202 748
- DE-A1- 102014 212 485
- GB-A- 2 004 286
- BLUM ALFRED W.: "Phenolic resins in rubber compounds: applications and new developments", FREE ONLINE LIBRARY, 1 February 2011 (2011-02-01), pages 1 - 14, XP055869307, Retrieved from the Internet <URL:https://www.thefreelibrary.com/Phenolic+resins+in+rubber+compounds:+applications+and+new...-a0251726495> [retrieved on 20211203]

## Beschreibung

Die Erfindung betrifft ein Verfahren zum Herstellen eines Extrudats zur Herstellung eines Body-Reifenbauteil.

Die Erfindung betrifft auch die Verwendung eines ausgeformten Extrudats hergestellt oder herstellbar nach dem Verfahren und die Verwendung einer Vorrichtung zur Durchführung des Verfahrens.

Aufgrund der momentanen Entwicklungen in der Kautschukindustrie - insbesondere bei der Reifenherstellung - die Herstellungsprozesse vollständig zu automatisieren, wachsen die Qualitätsanforderungen an das jeweilige Kautschukprodukt und den Zwischenprodukten, welche während des Herstellungsverfahrens zwischenzeitlich entstehen. Insbesondere von Bedeutung sind das Gewicht und geometrische Maße der extrudierten oder auch ausgeformten Kautschukmischung, welche häufig in Form eines Endlos-Streifens vorliegt. Bei der Extrusion wird eine angemischte Kautschukmischung beispielsweise mittels der Schnecken in einem Zweischnecken-Extruders extrudiert und mittels einer Formeinheit wie beispielsweise einer Vor- und Endschablone zu einem Kautschukprofil ausgeformt. Abweichungen von den geometrischen Maßen oder zu große Schwankungen beim Gewicht der extrudierten Kautschukmischung, d.h. dem Kautschukprofil, führen häufig dazu, dass eine Automatisierung nicht möglich ist oder ein zu großer Teil der Kautschukmischung verworfen werden muss. Diese Nachteile treten insbesondre bei Body-Reifenbauteil auf.

Aus der EP 3 431 251 A1 ist ein Verfahren zur Ermittlung des Schrumpfverhaltens einer Kautschukmischung nach dem Extrudieren bekannt, dass eine vorgewärmt Kautschukmischung einem Extruder zuführt, der die Kautschukmischung extrudiert und auf einen zweiten Temperaturbereich erwärmt. Das Extrudat wird auf eine vorbestimmte Länge abgelenkt und für einen vorbestimmten Zeitraum auf einen dritten Temperaturbereich erwärmt. Die Länge des Extrudate wird erneut gemessen.

Die GB 2 004 286 A offenbart eine Kautschukzusammensetzung mit geringen Anteilen an Harzen für Seitenwände von Luftreifen. Die Kautschukzusammensetzung weist weiterhin einen hohen Anteil an hoch aktivierten Antioxidantien auf, um eine beständige Kautschukmischung zu erreichen.

Eine primäre Aufgabe, die der Erfindung zugrunde liegt, besteht daher darin, ein Verfahren zum Herstellen eines Extrudats zur Herstellung eines Body-Reifenbauteil, welche die vorstehend beschriebenen bekannten Nachteile nicht aufweisen und ein automatisiertes Extrudieren einer Kautschukmischung zu einem Kautschukprofil ermöglicht. Insbesondere war es eine Aufgabe, Kautschukmischungen zu extrudieren, sodass sich ihr vorbestimmtes Gewicht oder ihre vorbestimmten Maße des hergestellten Extrudats oder des resultierenden Body-Reifenbauteil genauer einstellen lassen.

Gelöst wird diese Aufgabe erfindungsgemäß durch ein Verfahren zum Herstellen eines Extrudats zur Herstellung eines Body-Reifenbauteil, umfassend die folgenden Verfahrensschritte:
A) Herstellen oder Bereitstellen einer schwefelvernetzbaren Kautschukmischung, wobei die schwefelvernetzbare Kautschukmischung mindestens eines Harzes in einer Menge von 5 phr bis 60 phr umfasst,
B) Temperieren der in Schritt A) hergestellten oder bereitgestellten schwefelvernetzbaren Kautschukmischung mittels eines IR-Strahlers auf mindestens 40 °C,
C) Zuführen der in Schritt B) temperierten schwefelvernetzbaren Kautschukmischung mit einer Temperatur von 35 °C oder mehr in eine Extrusionseinheit zum Extrudieren von Kautschukmischungen und Extrudieren der zugeführten Kautschukmischung mittels der Extrusionseinheit bei einer Temperatur von 90 °C bis 150 °C,
D) Überführen der in Schritt C) extrudierten Kautschukmischung in eine Ausformeinheit und anschließendes Ausformen der überführten Kautschukmischung, sodass ein ausgeformtes Extrudat zur Herstellung eins Body-Reifenbauteil entsteht.

In neuerer Zeit müssen die vorstehend besteht beschriebenen Extrudate zur Herstellung eines Body-Reifenbauteils aus Kautschukmischungen wie vorstehend beschrieben mit sehr geringen Grünfestigkeiten zu Body-Reifenbauteil verarbeitet werden und müssen somit besonders strikte Anforderungen in der Formgebung erfüllen. Die große Leistung der vorliegenden Erfindung liegt nun darin, dass mit den vorstehend beschriebenen erfindungsgemäßen Verfahren Body-Reifenbauteilen aus den vorstehend beschriebenen Kautschukmischungen hergestellt werden können, welche die genannten Anforderungen an die Formstabilität erfüllen. Diese Formstabilität lässt sich insbesondere durch einem genauer einstellbaren Ist-Metergewicht im Vergleich zu einem Soll-Metergewicht erkennen, aber auch daran, dass die produktionsbedingten Schwankungen um das Soll-Metergewicht abnehmen. Diese sind insbesondere große Vorteile der vorliegenden Erfindung. Darüber hinaus lässt sich auch erkennen, dass bei den mit einem erfindungsgemäßen Verfahren hergestellten Extrudaten allgemein die angestrebten geometrischen Maße besser eingehalten werden.

Im Rahmen der vorliegenden Erfindung umfasst der Ausdruck "Body-Reifenbauteil" insbesondere die folgenden Reifenbauteile: Seitenwand, inklusive der Seitenwandmischung und dem Rim-Strip, sowie sämtliche Apexteile unterhalb der Seitenwand.

Bevorzugt ist ein Verfahren wie vorstehend beschrieben oder wie vorstehend als bevorzugt beschrieben, wobei die in Schritt B) temperierte schwefelvernetzbare Kautschukmischung unmittelbar vor der Extrusionseinheit oder auf der Zuführeinheit zumindest teilweise eine Temperatur im Bereich von 40°C bis 150°C aufweist, bevorzugt im Bereich von 50°C bis 110°C.

Ein Vorteil des vorstehend beschriebenen Aspekts der vorliegenden Erfindung ist, dass die vorstehend beschriebenen technischen vorteilhaften Effekte in den vorstehend beschriebenen Temperaturbereichen noch stärker ausfallen.

Besonders bevorzugt ist ein Verfahren wie vorstehend beschrieben oder wie vorstehend als bevorzugt beschrieben, wobei die schwefelvernetzbare Kautschukmischung während des Extrudierens in Schritt C) zumindest teilweise eine Temperatur in der Extrusionseinheit im Bereich von 50 °C bis 150 °C aufweist, bevorzugt im Bereich von 80 °C bis 110 °C,

Ein Vorteil des vorstehend beschriebenen Aspekts der vorliegenden Erfindung ist, dass die vorstehend beschriebenen technischen vorteilhaften Effekte in den vorstehend beschriebenen Temperaturbereichen noch stärker ausfallen.

Besonders bevorzugt ist ein Verfahren wie vorstehend beschrieben oder wie vorstehend als bevorzugt beschrieben oder wie vorstehend als besonders bevorzugt beschrieben, wobei die schwefelvernetzbare Kautschukmischung während des Extrudierens in Schritt C)
- zumindest teilweise einen Druck in der Extrusionseinheit im Bereich von 5 bis 400 bar aufweist, bevorzugt im Bereich von 70 bis 200 bar, besonders bevorzugt im Bereich von 80 bis 150 bar, ganz besonders bevorzugt im Bereich von 90 bis 110 bar,
   und/oder
- mit einem Durchsatz im Bereich von 10 kg/h bis 1000 kg/h durch die Extrusionseinheit extrudiert wird.

Ein Vorteil des vorstehend beschriebenen Aspekts der vorliegenden Erfindung ist, dass die vorstehend beschriebenen Drücke und Durchsätze nur mit einem vorstehend beschriebenen erfindungsgemäßen Verfahren und insbesondere mit vorstehend als bevorzugt beschriebenen Verfahren erreicht werden können. Ohne an eine wissenschaftliche Theorie gebunden sein zu wollen, wird davon ausgegangen, dass durch das Erreichen der vorstehend beschriebenen Drücke und Durchsätze die vorstehend beschriebenen Vorteile zur Formstabilität des Extrudats noch verstärkt werden.

Bevorzugt ist ein Verfahren wie vorstehend beschrieben oder wie vorstehend als bevorzugt beschrieben, wobei
- die schwefelvernetzbare Kautschukmischung in Schritt A) eine Mooney-Viskosität [ML1+4, bei 40°C] im Bereich von 40 MU bis 170 MU, bevorzugt im Bereich von 100 MU bis 170 MU, aufweist
   und
- die in Schritt C) zugeführte schwefelvernetzbare Kautschukmischung eine Mooney-Viskosität [ML1+4, bei 40°C] im Bereich von 30 MU bis 150 MU, bevorzugt im Bereich von 100 MU bis 150 MU, aufweist.

Ein Vorteil des vorstehend beschriebenen Aspekts der vorliegenden Erfindung ist, dass insbesondere Kautschukmischungen mit den vorstehend beschriebenen Viskositäten, welche die vorstehend unter einem erfindungsgemäßen Verfahren beschriebenen Kautschukmischungsbestandteile und/oder die nachstehend beschriebenen Kautschuke umfasst, eine besonders geringe Grünfestigkeit aufweisen und somit insbesondere von dem technischen Vorteil der vorliegenden Erfindung profitieren.

Bevorzugt ist ein Verfahren wie vorstehend beschrieben oder wie vorstehend als bevorzugt beschrieben, wobei
- die schwefelvernetzbare Kautschukmischung in Schritt A) ein dynamischer Speichermodul E' bei 80 °C im Bereich von 1 bis 20 MPa aufweist, bevorzugt im Bereich von 3 bis 12 MPa, besonders bevorzugt im Bereich von 5 bis 8 MPa, wobei der dynamische Speichermodul E' bei 55 °C gemäß DIN 53 513 aus Messung mit 20 % statischer Vorspannung und einer Dehnungsamplitude von 12 % bei einer Frequenz von 10 Hz ermittelt wurde,
   und
- die in Schritt C) zugeführte schwefelvernetzbare Kautschukmischung eine dynamische Steifigkeit G` bei 100 % Dehnung gemäß ASTM D8059 bei 20 °C im Bereich von 1 bis 50 MPa aufweist, bevorzugt im Bereich von 10 bis 30 MPa, besonders bevorzugt im Bereich von 15 bis 20 MPa.

Ein Vorteil des vorstehend beschriebenen Aspekts der vorliegenden Erfindung ist, dass die vorstehend beschriebenen technischen vorteilhaften Effekte in den vorstehend beschriebenen Steifigkeitsbereichen noch stärker ausfallen. Insbesondere hilft die vorstehend beschriebene Erhöhung der Steifigkeit, dass auch in einem vollautomatisierten Herstellungsprozess hergestellte vulkanisierte Reifenbauteile die vorstehend genannte Formstabilität erreichen. Dies gilt insbesondere in Kombination mit den vorstehend beschriebenen Temperaturen, Drücken und Durchsätzen im Extruder.

Bevorzugt ist ein Verfahren wie vorstehend beschrieben oder wie vorstehend als bevorzugt beschrieben, wobei
- die schwefelvernetzbare Kautschukmischung mindestens eines Harzes in einer Menge von 5 phr bis 60 phr umfasst
   und/oder
- das Harz ein Phenolharz oder eine Mischung aus Phenolharzen ist

Ein Vorteil des vorstehend beschriebenen Aspekts der vorliegenden Erfindung ist, dass insbesondere Kautschukmischungen wie vorstehend beschrieben und zusätzlich die vorstehend beschriebenen spezifischen Harze umfassend eine besonders niedrige Grünfestigkeit aufweisen und somit insbesondere mithilfe eines erfindungsgemäßen Verfahrens zu einem Reifenbauteil, insbesondere einem Body-Reifenbauteil, verarbeitet werden können.

Bevorzugt ist ein Verfahren wie vorstehend beschrieben oder wie vorstehend als bevorzugt beschrieben, wobei die schwefelvernetzbare Kautschukmischung zumindest einen Kautschuk und zumindest einen Füllstoff umfasst, wobei der Füllstoff bevorzugt Silika und/oder Ruß umfasst und der Kautschuk bevorzugt aus gesucht ist aus der Gruppe bestehend aus NR, IR, BR, SBR, SSBR und CR.

Ein Vorteil des vorstehend beschriebenen Aspekts der vorliegenden Erfindung ist, dass die vorstehend beschriebenen technischen vorteilhaften Effekte mit den vorstehend beschriebenen Kautschukmischungsbestandteile und Kautschuke noch stärker ausfallen.

Bevorzugt ist ein Verfahren wie vorstehend beschrieben oder wie vorstehend als bevorzugt beschrieben, wobei die schwefelvernetzbare Kautschukmischung eine Gesamtmenge an NR von 20 bis 100 phr, 50 bis 90 phr, umfasst.

Ein Vorteil des vorstehend beschriebenen Aspekts der vorliegenden Erfindung ist, dass die vorstehend beschriebenen technischen vorteilhaften Effekte mit den vorstehend beschriebenen Kautschukmischungsbestandteile und Kautschuke noch stärker ausfallen.

Bevorzugt ist ein Verfahren wie vorstehend beschrieben oder wie vorstehend als bevorzugt beschrieben, wobei die schwefelvernetzbare Kautschukmischung eine Gesamtmenge an Füllstoff von 50 bis 200 phr, bevorzugt 70 bis 150 phr, umfasst Ein Vorteil des vorstehend beschriebenen Aspekts der vorliegenden Erfindung ist, dass die vorstehend beschriebenen technischen vorteilhaften Effekte mit den vorstehend beschriebenen Bereichen für die Kautschukmischungsbestandteile und Kautschuke noch stärker ausfallen.

Bevorzugt ist ein Verfahren wie vorstehend beschrieben oder wie vorstehend als bevorzugt beschrieben, wobei die Extrusionseinheit ein Ein- oder Zweischneckenextruder und/oder eine Zahnradpumpe umfasst, wobei die Extrusionseinheit bevorzugt ein Einschneckenextruder ist.

Ein Vorteil des vorstehend beschriebenen Aspekts der vorliegenden Erfindung ist, dass die vorstehend beschriebenen technischen vorteilhaften Effekte mit den vorstehend beschriebenen Ein- oder Zweischneckenextruder oder der Zahnradpumpe noch stärker ausfallen.

Die vorstehend beschriebenen vorteilhaften Aspekte eines erfindungsgemäßen Verfahrens zum Herstellen eines Extrudats zur Herstellung eines Body-Reifenbauteil gelten auch für sämtliche Aspekte einer nachstehend beschriebenen Verwendung eines ausgeformten Extrudats und die nachstehend diskutierten vorteilhaften Aspekte erfindungsgemäßer Verwendungen gelten eines ausgeformten Extrudats entsprechend für sämtliche Aspekte eines erfindungsgemäßen Verfahrens zum Herstellen eines Extrudats zur Herstellung eines Body-Reifenbauteil.

Die Erfindung betrifft auch eine Verwendung eines ausgeformten Extrudats hergestellt oder herstellbar nach einem Verfahren der vorangehenden Ansprüche zur Herstellung eines Fahrzeugluftreifens mit einem Apexteils mit erhöhtem dynamischen Speichermodul E', wobei der dynamische Speichermodul E' des Apexteils des Fahrzeugluftreifens im Bereich von 1 bis 50 MPa liegt, bevorzugt im Bereich von 10 bis 30 MPa, besonders bevorzugt im Bereich von 15 bis 20 MPa, wobei der dynamische Speichermodul E' bei 55 °C gemäß DIN 53 513 aus Messung mit 20 % statischer Vorspannung und einer Dehnungsamplitude von 12 % bei einer Frequenz von 10 Hz ermittelt wurde.

Die vorstehend beschriebenen vorteilhaften Aspekte einer erfindungsgemäßen Verwendung eines ausgeformten Extrudats und eines erfindungsgemäßen Verfahrens zum Herstellen eines Extrudats zur Herstellung eines Body-Reifenbauteil gelten auch für sämtliche Aspekte einer nachstehend beschriebenen Verwendung und die nachstehend diskutierten vorteilhaften Aspekte erfindungsgemäßer Verwendungen gelten entsprechend für sämtliche Aspekte einer erfindungsgemäßen Verwendung eines ausgeformten Extrudats und eines erfindungsgemäßen Verfahrens zum Herstellen eines Extrudats zur Herstellung eines Body-Reifenbauteil.

Die Erfindung betrifft auch eine Verwendung einer Vorrichtung zur Durchführung eines Verfahrens nach einem der vorangehenden Ansprüche, insbesondere zur Herstellung eines ausgeformten Extrudats zur Herstellung eines Body-Reifenbauteil, wobei das ausgeformte Extrudat aus einer Kautschukmischung wie in einem der vorangehenden Ansprüche definiert besteht, wobei die Vorrichtung bevorzugt
- zumindest einen IR-Strahler zum Temperieren einer schwefelvernetzbaren Kautschukmischung,
- eine Extrusionseinheit zum Extrudieren von den mittels des IR-Strahlers temperierten Kautschukmischung,
- eine Ausformeinheit zum Ausformen der mittels der Extrusionseinheit extrudierten Kautschukmischung,
- eine Schneideeinheit zum Zuschneiden des mittels der Ausformeinheit ausgeformten Endlosstreifens, sodass ein unvulkanisiertes Seitenwandbauteil zur Verwendung in einem Reifenrohling entsteht,
   und
- eine eine Vulkanisationsform umfassende Vulkanisationseinheit zum Vulkanisieren eines zugeschnittenen Seitenwandbauteil in einem Reifenrohling, sodass ein vulkanisiertes Seitenwandbauteil eines Fahrzeugluftreifens entsteht,
umfasst.

## Patentansprüche

1. Verfahren zum Herstellen eines Extrudats zur Herstellung eines Body-Reifenbauteil, umfassend die folgenden Verfahrensschritte:
A) Herstellen oder Bereitstellen einer schwefelvernetzbaren Kautschukmischung, wobei die schwefelvernetzbare Kautschukmischung mindestens eines Harzes in einer Menge von 5 phr bis 60 phr umfasst,
B) Temperieren der in Schritt A) hergestellten oder bereitgestellten schwefelvernetzbaren Kautschukmischung mittels eines IR-Strahlers auf mindestens 40 °C,
C) Zuführen der in Schritt B) temperierten schwefelvernetzbaren Kautschukmischung mit einer Temperatur von 35 °C oder mehr in eine Extrusionseinheit zum Extrudieren von Kautschukmischungen und Extrudieren der zugeführten Kautschukmischung mittels der Extrusionseinheit bei einer Temperatur von 90 °C bis 150 °C,
D) Überführen der in Schritt C) extrudierten Kautschukmischung in eine Ausformeinheit und anschließendes Ausformen der überführten Kautschukmischung, sodass ein ausgeformtes Extrudat zur Herstellung eins Body-Reifenbauteil entsteht.

2. Verfahren nach Anspruch 1, wobei die in Schritt B) temperierte schwefelvernetzbare Kautschukmischung unmittelbar vor der Extrusionseinheit oder auf der Zuführeinheit zumindest teilweise eine Temperatur im Bereich von 40°C bis 150°C aufweist, bevorzugt im Bereich von 50°C bis 110°C.

3. Verfahren nach einem der vorangehenden Ansprüche, wobei die schwefelvernetzbare Kautschukmischung während des Extrudierens in Schritt C)
- zumindest teilweise eine Temperatur in der Extrusionseinheit im Bereich von 50 °C bis 150 °C aufweist, bevorzugt im Bereich von 80 °C bis 110 °C,
und/oder
- zumindest teilweise einen Druck in der Extrusionseinheit im Bereich von 5 bis 400 bar aufweist, bevorzugt im Bereich von 70 bis 200 bar, besonders bevorzugt im Bereich von 80 bis 150 bar, ganz besonders bevorzugt im Bereich von 90 bis 110 bar,
und/oder
- mit einem Durchsatz im Bereich von 10 kg/h bis 1000 kg/h durch die Extrusionseinheit extrudiert wird.

4. Verfahren nach einem der vorangehenden Ansprüche, wobei
- die schwefelvernetzbare Kautschukmischung in Schritt A) eine Mooney-Viskosität [ML1+4, bei 40°C] im Bereich von 40 MU bis 170 MU, bevorzugt im Bereich von 100 MU bis 170 MU, aufweist
und
- die in Schritt C) zugeführte schwefelvernetzbare Kautschukmischung eine Mooney-Viskosität [ML1+4, bei 40°C] im Bereich von 30 MU bis 150 MU, bevorzugt im Bereich von 100 MU bis 150 MU, aufweist.

5. Verfahren nach einem der vorangehenden Ansprüche, wobei
- die schwefelvernetzbare Kautschukmischung in Schritt A) ein dynamischer Speichermodul E' bei 80 °C im Bereich von 1 bis 20 MPa aufweist, bevorzugt im Bereich von 3 bis 12 MPa, besonders bevorzugt im Bereich von 5 bis 8 MPa, wobei der dynamische Speichermodul E' bei 55 °C gemäß DIN 53 513 aus Messung mit 20 % statischer Vorspannung und einer Dehnungsamplitude von 12 % bei einer Frequenz von 10 Hz ermittelt wurde,
und
- die in Schritt C) zugeführte schwefelvernetzbare Kautschukmischung eine dynamische Steifigkeit G` bei 100 % Dehnung gemäß ASTM D8059 bei 20 °C im Bereich von 1 bis 50 MPa aufweist, bevorzugt im Bereich von 10 bis 30 MPa, besonders bevorzugt im Bereich von 15 bis 20 MPa.

6. Verfahren nach einem der vorangehenden Ansprüche, wobei
- die schwefelvernetzbare Kautschukmischung mindestens eines Harzes in einer Menge von 5 phr bis 60 phr umfasst
und/oder
- das Harz ein Phenolharz oder eine Mischung aus Phenolharzen ist.

7. Verfahren nach einem der vorangehenden Ansprüche, wobei die schwefelvernetzbare Kautschukmischung zumindest einen Kautschuk und zumindest einen Füllstoff umfasst, wobei der Füllstoff bevorzugt Silika und/oder Ruß umfasst und der Kautschuk bevorzugt aus gesucht ist aus der Gruppe bestehend aus NR, IR, BR, SBR, SSBR und CR.

8. Verfahren nach einem der vorangehenden Ansprüche, wobei die schwefelvernetzbare Kautschukmischung eine Gesamtmenge an NR von 20 bis 100 phr, 50 bis 90 phr, umfasst.

9. Verfahren nach einem der vorangehenden Ansprüche, wobei die schwefelvernetzbare Kautschukmischung eine Gesamtmenge an Füllstoff von 50 bis 200 phr, bevorzugt 70 bis 150 phr, umfasst.

10. Verfahren nach einem der vorangehenden Ansprüche, wobei die Extrusionseinheit ein Ein- oder Zweischneckenextruder und/oder eine Zahnradpumpe umfasst, wobei die Extrusionseinheit bevorzugt ein Einschneckenextruder ist.

11. Verwendung eines ausgeformten Extrudats hergestellt oder herstellbar nach einem Verfahren der vorangehenden Ansprüche zur Herstellung eines Fahrzeugluftreifens mit einem Apexteils mit erhöhtem dynamischen Speichermodul E', wobei der dynamische Speichermodul E' des Apexteils des Fahrzeugluftreifens im Bereich von 1 bis 50 MPa liegt, bevorzugt im Bereich von 10 bis 30 MPa, besonders bevorzugt im Bereich von 15 bis 20 MPa, wobei der dynamische Speichermodul E' bei 55 °C gemäß DIN 53 513 aus Messung mit 20 % statischer Vorspannung und einer Dehnungsamplitude von 12 % bei einer Frequenz von 10 Hz ermittelt wurde.

12. Verwendung einer Vorrichtung zur Durchführung eines Verfahrens nach einem der vorangehenden Ansprüche, insbesondere zur Herstellung eines ausgeformten Extrudats zur Herstellung eines Body-Reifenbauteil, wobei das ausgeformte Extrudat aus einer Kautschukmischung wie in einem der vorangehenden Ansprüche definiert besteht, wobei die Vorrichtung bevorzugt
- zumindest einen IR-Strahler zum Temperieren einer schwefelvernetzbaren Kautschukmischung,
- eine Extrusionseinheit zum Extrudieren von den mittels des IR-Strahlers temperierten Kautschukmischung,
- eine Ausformeinheit zum Ausformen der mittels der Extrusionseinheit extrudierten Kautschukmischung,
- eine Schneideeinheit zum Zuschneiden des mittels der Ausformeinheit ausgeformten Endlosstreifens, sodass ein unvulkanisiertes Seitenwandbauteil zur Verwendung in einem Reifenrohling entsteht,
und
- eine eine Vulkanisationsform umfassende Vulkanisationseinheit zum Vulkanisieren eines zugeschnittenen Seitenwandbauteil in einem Reifenrohling, sodass ein vulkanisiertes Seitenwandbauteil eines Fahrzeugluftreifens entsteht,
umfasst.

## Claims

1. Process for producing an extrudate for producing a tyre body component comprising the following process steps:
A) producing or providing a sulfur-crosslinkable rubber mixture, wherein the sulfur-crosslinkable rubber mixture comprises at least one resin in an amount of 5 phr to 60 phr,
B) heating the sulfur-crosslinkable rubber mixture produced or provided in step A) to at least 40°C using an IR emitter,
C) supplying the sulfur-crosslinkable rubber mixture heated in step B) at a temperature of 35°C or more to an extrusion unit for extruding rubber mixtures and extruding the supplied rubber mixture using the extrusion unit at a temperature of 90°C to 150°C,
D) transferring the rubber mixture extruded in step C) into a forming unit and subsequently forming the transferred rubber mixture to afford a formed extrudate for producing a tyre body component.

2. Process according to Claim 1, wherein the sulfur-crosslinkable rubber mixture heated in step B) at least partially has a temperature in the range from 40°C to 150°C, preferably in the range from 50°C to 110°C, immediately upstream of the extrusion unit or in the feed unit.

3. Process according to either of the preceding claims, wherein during the extruding in step C) the sulfur-crosslinkable rubber mixture
- at least partially has a temperature in the extrusion unit in the range from 50°C to 150°C, preferably in the range from 80°C to 110°C,
and/or
- at least partially has a pressure in the extrusion unit in the range from 5 to 400 bar, preferably in the range from 70 to 200 bar, particularly preferably in the range from 80 to 150 bar, very particularly preferably in the range from 90 to 110 bar,
and/or
- is extruded through the extrusion unit at a throughput in the range from 10 kg/h to 1000 kg/h.

4. Process according to any of the preceding claims, wherein
- in step A) the sulfur-crosslinkable rubber mixture has a Mooney viscosity [ML1+4, at 40°C] in the range from 40 MU to 170 MU, preferably in the range from 100 MU to 170 MU,
and
- the sulfur-crosslinkable rubber mixture supplied in step C) has a Mooney viscosity [ML1+4, at 40°C] in the range from 30 MU to 150 MU, preferably in the range from 100 MU to 150 MU.

5. Process according to any of the preceding claims, wherein
- the sulfur-crosslinkable rubber mixture in step A) has a dynamic storage modulus E' at 80°C in the range from 1 to 20 MPa, preferably in the range from 3 to 12 MPa, particularly preferably in the range from 5 to 8 MPa, wherein the dynamic storage modulus E' was determined at 55°C according to DIN 53 513 from measurement with 20% static pre-stress and a strain amplitude of 12% at a frequency of 10 Hz
and
- the sulfur-crosslinkable rubber mixture supplied in step C) has a dynamic stiffness G' at 100% elongation according to ASTM D8059 at 20°C in the range from 1 to 50 MPa, preferably in the range from 10 to 30 MPa, particularly preferably in the range from 15 to 20 MPa.

6. Process according to any of the preceding claims, wherein
- the sulfur-crosslinkable rubber mixture comprises at least one resin in an amount of 5 phr to 60 phr
and/or
- the resin is a phenolic resin or a mixture of phenolic resins.

7. Process according to any of the preceding claims, wherein the sulfur-crosslinkable rubber mixture comprises at least one rubber and at least one filler, wherein the filler preferably comprises silica and/or carbon black and the rubber is preferably selected from the group consisting of NR, IR, BR, SBR, SSBR and CR.

8. Process according to any of the preceding claims, wherein the sulfur-crosslinkable rubber mixture comprises a total amount of NR of 20 to 100 phr, 50 to 90 phr.

9. Process according to any of the preceding claims, wherein the sulfur-crosslinkable rubber mixture comprises a total amount of filler of 50 to 200 phr, preferably 70 to 150 phr.

10. Process according to any of the preceding claims, wherein the extrusion unit comprises a single- or twin-screw extruder and/or a gear pump, wherein the extrusion unit is preferably a single-screw extruder.

11. Use of a formed extrudate produced or producible by a process of the preceding claims for producing a pneumatic vehicle tyre comprising an apex part having an elevated dynamic storage modulus E', wherein the dynamic storage modulus E' of the apex part of the pneumatic vehicle tyre is in the range from 1 to 50 MPa, preferably in the range from 10 to 30 MPa, particularly preferably in the range from 15 to 20 MPa, wherein the dynamic storage modulus E' at 55°C according to DIN 53 513 has been determined from measurement with 20% static pre-stress and a strain amplitude of 12% at a frequency of 10 Hz.

12. Use of an apparatus for performing a process according to any of the preceding claims, in particular for producing a formed extrudate to produce a tyre body component, wherein the formed extrudate is composed of a rubber mixture as defined in any of the preceding claims, wherein the apparatus preferably comprises
- at least one IR emitter for heating a sulfur-crosslinkable rubber mixture,
- an extrusion unit for extruding the rubber mixture heated using the IR emitter,
- a forming unit for forming the rubber mixture extruded using the extrusion unit,
- a cutting unit for cutting-to-size the continuous strip formed using the forming unit to form an unvulcanized sidewall component for use in a green tyre and
- a vulcanizing unit comprising a vulcanizing mould for vulcanizing a cut-to-size sidewall component in a green tyre to form a vulcanized sidewall component of a pneumatic vehicle tyre.

## Revendications

1. Procédé de fabrication d'un produit extrudé destiné à la fabrication d'un composant de corps de pneu, comprenant les étapes de procédé suivantes :
A) préparation ou mise à disposition d'un mélange de caoutchouc réticulable au soufre, le mélange de caoutchouc réticulable au soufre comprenant au moins une résine en une quantité de 5 pcc à 60 pcc,
B) thermorégulation du mélange de caoutchouc réticulable au soufre préparé ou mis à disposition dans l'étape A) au moyen d'un émetteur IR à au moins 40°C,
C) introduction du mélange de caoutchouc réticulable au soufre thermorégulé dans l'étape B) présentant une température de 35°C ou plus dans une unité d'extrusion destinée à extruder des mélanges de caoutchouc et extrusion du mélange de caoutchouc introduit au moyen de l'unité d'extrusion à une température de 90°C à 150°C,
D) transfert de mélange de caoutchouc extrudé dans l'étape C) dans une unité de moulage et moulage consécutif du mélange de caoutchouc transféré, de telle sorte qu'il se forme un produit extrudé moulé destiné à fabriquer un composant de corps de pneu.

2. Procédé selon la revendication 1, le mélange de caoutchouc réticulable au soufre thermorégulé dans l'étape B) présentant, directement devant l'unité d'extrusion ou sur l'unité d'introduction, au moins partiellement une température dans la plage de 40°C à 150°C, de préférence dans la plage de 50°C à 110°C.

3. Procédé selon l'une des revendications précédentes, le mélange de caoutchouc réticulable au soufre, pendant l'extrusion dans l'étape C),
- présentant au moins partiellement une température dans l'unité d'extrusion dans la plage de 50°C à 150°C, de préférence dans la plage de 80°C à 110°C, et/ou
- présentant au moins partiellement une pression dans l'unité d'extrusion dans la plage de 5 à 400 bars, de préférence dans la plage de 70 à 200 bars, de manière particulièrement préférée dans la plage de 80 à 150 bars, de manière tout particulièrement préférée dans la plage de 90 à 110 bars,
et/ou
- étant extrudé à un débit dans la plage de 10 kg/h à 1000 kg/h par l'unité d'extrusion.

4. Procédé selon l'une des revendications précédentes,
- le mélange de caoutchouc réticulable au soufre dans l'étape A) présentant une viscosité de Mooney [ML1+4, à 40°C] dans la plage de 40 MU à 170 MU, de préférence dans la plage de 100 MU à 170 MU
et
- le mélange de caoutchouc réticulable au soufre introduit dans l'étape C) présentant une viscosité de Mooney [ML1+4, à 40°C] dans la plage de 30 MU à 150 MU, de préférence dans la plage de 100 MU à 150 MU.

5. Procédé selon l'une des revendications précédentes,
- le mélange de caoutchouc réticulable au soufre dans l'étape A) présentant un module d'accumulation dynamique E' à 80°C dans la plage de 1 à 20 MPa, de préférence dans la plage de 3 à 12 MPa, de manière particulièrement préférée dans la plage de 5 à 8 MPa, le module d'accumulation dynamique E' à 55°C ayant été déterminé selon DIN 53 513 à partir d'une mesure avec une précontrainte statique de 20% et une amplitude d'allongement de 12% à une fréquence de 10 Hz,
et
- et le mélange de caoutchouc réticulable au soufre introduit dans l'étape C) présentant une rigidité dynamique G' à un allongement de 100% selon la norme ASTM D8059 à 20°C dans la plage de 1 à 50 MPa, de préférence dans la plage de 10 à 30 MPa, de manière particulièrement préférée dans la plage de 15 à 20 MPa.

6. Procédé selon l'une des revendications précédentes,
- le mélange de caoutchouc réticulable au soufre comprenant au moins une résine en une quantité de 5 pcc à 60 pcc
et/ou
- la résine étant une résine phénolique ou un mélange de résines phénoliques.

7. Procédé selon l'une des revendications précédentes, le mélange de caoutchouc réticulable au soufre comprenant au moins un caoutchouc et au moins une charge, la charge comprenant de préférence de la silice et/ou de la suie et le caoutchouc étant de préférence choisi dans le groupe constitué par NR, IR, BR, SBR, SSBR et CR.

8. Procédé selon l'une des revendications précédentes, le mélange de caoutchouc réticulable au soufre comprenant une quantité totale de NR de 20 à 100 pcc, de 50 à 90 pcc.

9. Procédé selon l'une des revendications précédentes, le mélange de caoutchouc réticulable au soufre comprenant une quantité totale de charge de 50 à 200 pcc, de préférence de 70 à 150 pcc.

10. Procédé selon l'une des revendications précédentes, l'unité d'extrusion comprenant une extrudeuse à une ou à deux vis sans fin et/ou une pompe à roue dentée, l'unité d'extrusion étant de préférence une extrudeuse à une vis sans fin.

11. Utilisation d'un produit extrudé moulé fabriqué ou pouvant être fabriqué selon un procédé selon les revendications précédentes pour la fabrication d'un pneumatique pour véhicule, présentant une partie d'apex pourvue d'un module d'accumulation dynamique E' augmenté, le module d'accumulation dynamique E' de la partie d'apex du pneumatique pour véhicule étant situé dans la plage de 1 à 50 MPa, de préférence dans la plage de 10 à 30 MPa, de manière particulièrement préférée dans la plage de 15 à 20 MPa, le module d'accumulation dynamique E' à 55°C ayant été déterminé selon la norme DIN 53 513 à partir d'une mesure avec une précontrainte statique de 20% et une amplitude d'allongement de 12% à une fréquence de 10 Hz.

12. Utilisation d'un dispositif destiné à la réalisation d'un procédé selon l'une des revendications précédentes, en particulier à la fabrication d'un produit extrudé moulé en vue de la fabrication d'un composant de corps de pneu, le produit extrudé moulé étant constitué par un mélange de caoutchouc tel que défini dans l'une des revendications précédentes, le dispositif comprenant de préférence
- au moins un émetteur d'IR destiné à thermoréguler un mélange de caoutchouc réticulable au soufre,
- une unité d'extrusion destinée à extruder le mélange de caoutchouc thermorégulé au moyen de l'émetteur d'IR,
- une unité de moulage destinée à mouler le mélange de caoutchouc extrudé au moyen de l'unité d'extrusion,
- une unité de coupe destinée à couper la bande continue moulée au moyen de l'unité de moulage, de telle sorte qu'un composant non vulcanisé de flanc latéral destiné à être utilisé dans une ébauche de pneu se forme
et
- une unité de vulcanisation comprenant un moule de vulcanisation destinée à vulcaniser un composant coupé de flanc latéral en une ébauche de pneu, de telle sorte qu'un composant vulcanisé de flanc latéral d'un pneumatique pour véhicule se forme.
